# EUROPEAN PATENT SPECIFICATION

(11) **EP 1 872 062 B1**
(45) Date of publication and mention of the grant of the patent: **12.10.2011**
(21) Application number: 06728481.0
(22) Date of filing: 13.03.2006
(51) Int. Cl.: F24H 8/00, F24H 1/40, F24H 1/48

(54) **HEAT EXCHANGER FOR CONDENSING WALL-MOUNTED BOILERS**
WÄRMETAUSCHER FÜR WANDMONTIERTEN KONDENSATORKESSEL
ECHANGEUR DE CHALEUR POUR CHAUDIERES MURALES A CONDENSATION

(30) Priority: 15.03.2005 IT BO20050155
(43) Date of publication of application: 02.01.2008
(73) Proprietor: TEC.LAB. - SOCIETA' COOPERATIVA, 40358 Sorbolo (IT)
(72) Inventor: Lovascio, Nicola, I-42100 Reggio Emilia (IT); Rastelli, Raffaello, I-43058 Sorbolo (IT)
(74) Representative: Jorio, Paolo
(86) International application number: PCT/IT2006/000146
(87) International publication number: WO 2006/097959

(56) References cited:
- EP-A- 0 231 962
- EP-A- 0 687 870
- EP-A- 1 243 866
- EP-A- 1 281 919

## Description

The present invention refers to a new mono-bithermic unit, said in technical term "monoblock", comprising a high efficiency heat exchanger for the condensation of the smokes, a combustion chamber and a smoke chamber for the combustion gases to be used in the condensing wall-mounted boilers of compact shape. As it is known the so known condensing boilers exploit both the primary heat that is generated with the combustion of the burned gas than the condensing latent heat that is still contained in the smokes produced to the combustion that, in the conventional boilers, is dispelled through the smoke stack without to be exploited. The latent heat of smoke condensation is generally got back through heat exchangers of big dimension, made of aluminum or stainless steel to make them resistant to the acid corrosion of the condensation, to be realized with different geometric shapes and where the smokes lap a series of pipes or of chambers across to the water of a heating plant. The quantity of heat gets back through the condensation of the smokes goes to increase the efficiency of the boiler of several percentage points, in relation inversely proportional to the temperature of working of the plant, with efficiencies higher te the conventional wall-mounted boilers of fifteen percentage points.

The patent application EP 1 243 866 discloses a heat exchanger in a condensation boiler comprising a plurality of pipes defining a water flow path and presenting an elliptic section to improve the exchange of heat between fumes and water and comprising at least two covers mounted at a respective end of the plurality of pipes.

As a further example, the patent application EP 231 962 relates to a heater with tap water supply and a heat exchanger for such a heater; wherein the heat exchanger comprises a plurality of parallel pipes which are provided with fins to improve the exchange of heat and connected to each other by means of connecting parts. Some of the pipes are provided with an internal pipe for tap water to be heated, which internal pipe is also provided with fins and extends coaxially in a respective pipe.

However, it is to be considered that the condensing boilers that use known heat exchangers have some drawbacks. First of all the heat exchangers formed to a series of pipes or to finned/peged chambers acrossed to the water are complex, encumbrance and expensive. Moreover, the assembling with the combustion chamber and with the smoke chamber needs of complicated contrivances to guarantee the seal of the combustion circuit.

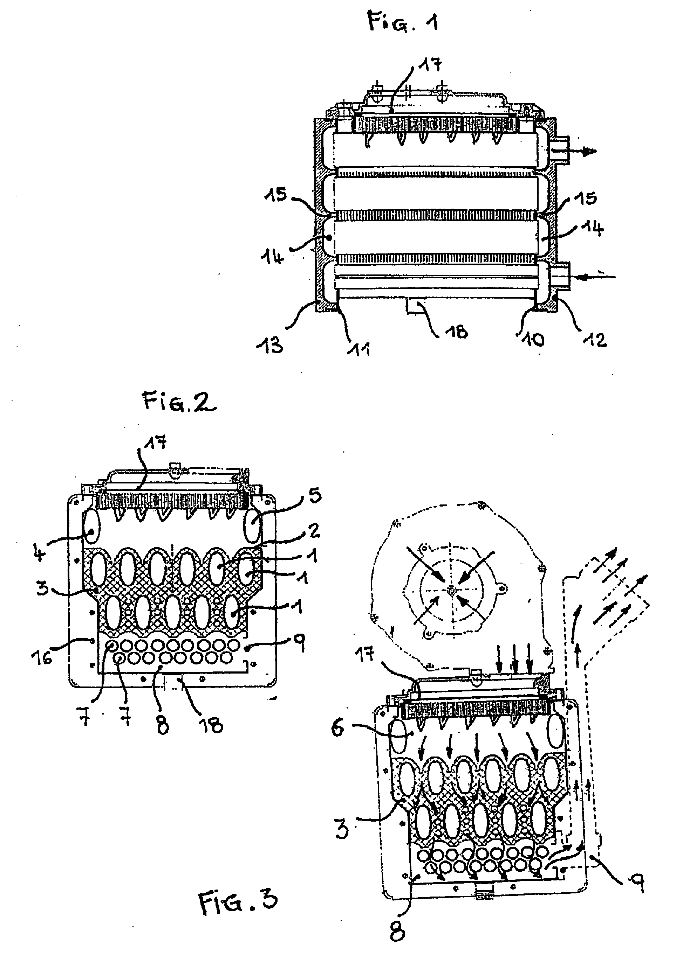

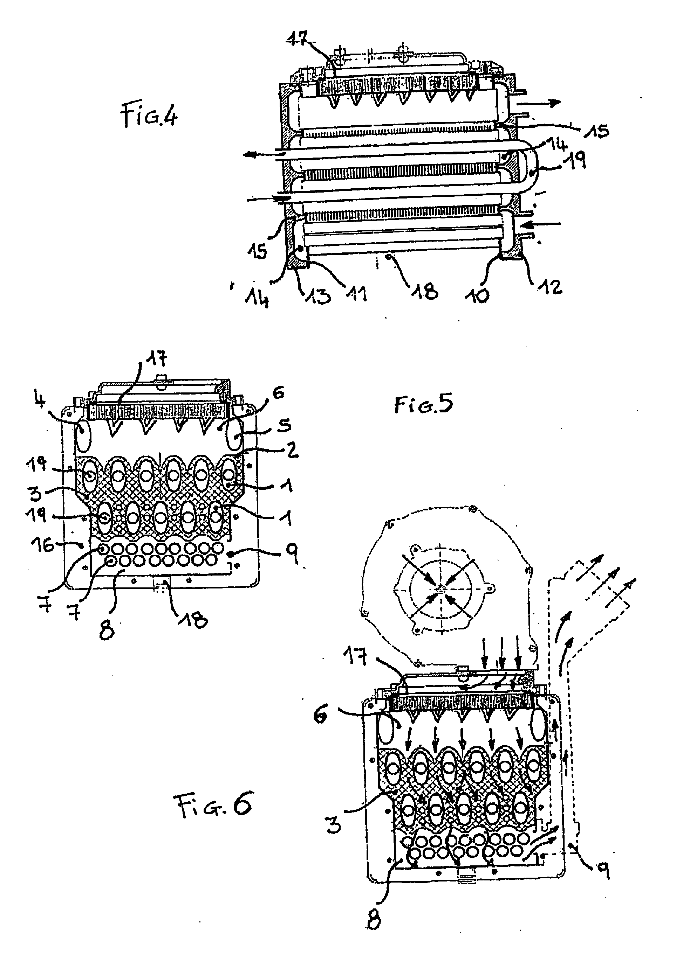

Aim of the present invention is to eliminate the above cited drawbacks creating mono-bithermic unit of compact dimensions, with condensation to high performance, easy, cheap and where a defined geometric shape make easy the fitting up inside wall-mounted boilers always smaller without the necessity to design again the boiler around the heat exchanger. Other characteristic of the invention is to create a monothermic unit with a mixed exchange surface, dry/wet, in the zone of inlet of the smokes and only wet in the zone of outlet of the smokes to obtain the better performances in the efficiency, with low turbulence of the fluids so to give small loss of loading regarding the water and the smokes. Moreover, it is provided a heat exchanger with a double fluid circuit, being crossed by both the water of the heating circuit and the water of the sanitary circuit so to integrate the necessary exchange surface for the immediate production of sanitary water. Said heat exchanger, in particular, consists of a plurality of elliptic section pipes 1 in aluminium or stainless steel placed on two or more rows and passing through a plurality of heat transfer plates 2, these plates of aluminium or stainless steel being distanced each other with constant spacing. Said heat transfer plates 2 have braze welding onto the first elliptic pipes 1 and form with said first pipes the mixed thermic exchange surface, wet/dry, of the central part 3 of the heat exchanger. In the upper part of the unit two second elliptic pipes 4 and 5 are present, equal to the pipes closed in the heat transfer plates and of the same materials, to form the side wet walls for cooling of the combustion chamber 6. In the lower part of the heat exchanger are present a series of circular section pipes 7, in aluminium or stainless steel, which do not pass through a plurality of heat transfer plates, that determine, inside the smoke chamber 8, the condensation zone for the recovery of the latent heat of the smokes before a outlet 9 toward the exhaust stack. The ends of the second elliptic pipes 4 and 5 and of the circular pipes 7 are brazed in a furnace with suitable alloys onto two piping plates 10 and 11 coupled with covers 12 and 13 with suitable labyrinth connection chambers 14 separated by dividing walls 15. A carter 16 for the seal closing defines the border of the unit englobing the combustion chamber 6 with the second pipes 4 and 5, the central part 3 of the heat exchanger composed of several first pipes 1 passing through heat transfer plates 2 and the plurality of circular section pipes 7 of the smoke chamber 8. In this way the smoke created in the combustion chamber 6 flows through the outlet 9 toward the exhaust stack. The combustion chamber 6 is upper closed by a conventional premixed burner 17 having the work to press the combustion gases to cross lowering the unit. The combustion gases exchange heat with the water at first inside the combustion chamber, through the second pipes 4 and 5 cooling the chamber, then with the heat transfer plates 2 being passed trough by the plurality of pipes 1 forming the central part 3 of the unit, and at the end with the plurality of circular pipes 7 of the smoke chamber 8, where the condensation heat is recovery. The water of the heating plant crosses the unit in the opposite direction to the smoke, entering inside the circular section pipes 7 of the smoke chamber 8, to prosecute inside the first pipes 1 of the central part 3 of the heat exchanger to arrive, at the end, inside the second pipes 4 and 5 of cooling of the combustion chamber from which said water comes out toward the heating plant. In the lower part of the smoke chamber is present a joint 18 for the conveyance of the condensation produced to the smokes toward the discharge siphon. In an embodiment is provided a bithermic unit that provides a heat exchanging pipe 19, preferably in copper, for the immediate production of hot sanitary water, inside the plurality of elliptic pipes 1 passing through the heat transfer thermic plates 2. The invented unit is illustrated in a merely indicative and not limiting way in the drawings 1 to 6. In particular figures 1 to 3 shows the monothermic unit whereas the Fig. 4 to 6 shows the bithermic unit. In the figure 1 is longitudinal section view of the monothermic unit. The figure 2 is transversal section view of the same. Figure 3 is transversal section view of the monothermic unit with narrows indicating the flow of the combustion gases coming form the burner 17 and directs toward the outlet 9 of discharge of the stack. In the figure 4 is longitudinal section view of the bithermic unit. The figure 5 is transversal section view of the same. Figure 6 is transversal section view of the bithermic unit with narrows indicating the flow and with the heat exchanging pipe 19 for the bithermic use, i.e. with working of immediate production of sanitary hot water. For a better reading of the cited drawings a list of the components indicated on them is following given:
1 = elliptic pipes
2 = thermic plates
3 = central part
4 = elliptic pipe
5 = elliptic pipe
6 = combustion chamber
7 = circular pipes
8 = smoke chamber
9 = outlet
10 = piping plate
11= piping plate
12 = cover
13 = cover
14 = labyrinth connection chambers
15 = dividing walls
16 = carter
17 = premixed burner
18 = joint
19 = heat exchanging pipe

## Claims

1. Heat exchanger for condensing wall-mounted boilers comprising a plurality of first elliptic section pipes (1) in aluminum or stainless steel placed in two or more rows and passing through a plurality of heat transfer plates (2), these plates of aluminum or stainless steel are distanced from each other with constant spacing and brazed welded onto the first elliptic pipes (1) to form with them the mixed thermic exchange surface, wet/dry, of the central part (3) of the heat exchanger; and in the upper part of the heat exchanger, two second elliptic pipes (4, 5) are present, equal and of the same material of the first pipes (1), to form side wet walls for cooling of the combustion chamber (6); the heat exchanger being **characterized in that** in the lower part of the heat exchanger a series of circular section pipes (7) are present, in aluminum or stainless steel, which do not pass through a plurality of heat transfer plates, that determine, inside a smoke chamber (8), the condensation zone for the recovery of the latent heat of the smoke before an outlet (9) toward the exhaust stack; and **in that** the pipes of the heat exchanger are arranged in such a way that the water of the heating plant flows through the heat exchanger in the opposite direction to the smoke , said water entering inside the circular section pipes (7) of the smoke chamber (8), to prosecute inside the second pipes (4, 5) for cooling the combustion chamber from which said water exits toward the heating plant.

2. Heat exchanger for condensing wall-mounted boilers according to claim 1 comprising a heat exchanging pipe (19), preferably in copper, for the immediate production of hot sanitary water, located inside the plurality of first elliptic pipes (1) passing through the heat transfer plates (2).

3. Heat exchanger for condensing wall-mounted boilers, as for the previous claims, **characterized in that** the ends of the second elliptic pipes (4, 5) and of the circular pipes (7) are brazed in a furnace with suitable alloys onto two piping plates (10, 11) being coupled with covers (12, 13) with suitable labyrinth connection chambers (14) separated by dividing walls (15).

4. Heat exchanger for condensing wall-mounted boilers, as for the previous claims, **characterized in that** it comprises a carter (16) for the seal closing defining the border of the unit englobing the combustion chamber (6) with the second pipes (4, 5), the central part (3) of the heat exchanger composed of several first pipes (1) passing through heat transfer plates (2) and the plurality of circular section pipes (7) of the smoke chamber (8), so that the smoke flows from the combustion chamber (6) to the outlet (9) and toward the exhaust stack.

5. Heat exchanger for condensing wall-mounted boilers, as for the previous claims, **characterized in that** a monothermic heat exchanger is provided with a mixed exchange surface, dry/wet, in the zone of inlet of the smokes and only wet in the zone of outlet of the smokes to obtain the better performances in the efficiency, with low turbulence of the fluids so to give small loss of loading regarding the water and the smokes.

6. Heat exchanger for condensing wall-mounted boilers, as for the previous claims, **characterized in that** the heat exchanger has a double fluid circuit, being crossed by both the water of the heating a circuit and the water of the sanitary circuit so to integrate the necessary exchange surface for the immediate production of sanitary water.

## Patentansprüche

1. Wärmetauscher für wandmontierte Kondensatorkessel, mit mehreren ersten Rohren (1) mit elliptischem Querschnitt aus Aluminium oder rostfreiem Stahl, die in zwei oder mehr Reihen angeordnet sind und sich durch mehrere Wärmeübertragungsplatten (2) erstrecken, wobei diese aus Aluminium oder rostfreiem Stahl bestehenden Platten in konstanten Abständen voneinander angeordnet sind und an die ersten elliptischen Rohre (1) schweißgelötet sind, um mit diesen die gemischte Nass/Trocken-Wärmeaustauschfläche des Mittelteils (3) des Wärmetauschers zu bilden; und wobei in dem oberen Teil des Wärmetauschers zwei zweite elliptische Rohre (4, 5) vorgesehen sind, die den ersten Rohren (1) gleich sind und aus dem gleichen Material bestehen, um nasse Seitenwände zum Kühlen der Brennkammer (6) zu bilden, wobei der Wärmetauscher **dadurch gekennzeichnet ist, dass** im unteren Teil des Wärmetauschers eine Reihe von Rohren (7) mit kreisrundem Querschnitt aus Aluminium oder rostfreiem Stahl vorhanden ist, die sich nicht durch mehrere Wärmeübertragungsplatten erstrecken, und welche in einer Rauchkammer (8) die Kondensationszone für die Rückgewinnung der latenten Wärme des Rauchs vor einem Auslass (9) zum Abluftkamin bildet; und dass die Rohre des Wärmetauschers derart angeordnet sind, dass das Wasser der Heizanlage in zum Rauch entgegengesetzter Richtung durch den Wärmetauscher strömt, wobei das Wasser in die Rohre (7) mit kreisrundem Querschnitt der Rauchkammer (8) eintritt, um zum Kühlen der Brennkammer weiter in die zweiten Rohre (4, 5) zu fließen, von wo das Wasser in Richtung der Heizanlage austritt.

2. Wärmetauscher für wandmontierte Kondensatorkessel nach Anspruch 1, mit einem vorzugsweise aus Kupfer bestehenden Wärmetauschrohr (19) für die unmittelbare Bereitung von warmem Sanitärwasser, das in den mehreren ersten elliptischen Rohren (1) angeordnet ist, welche sich durch die Wärmetauscherplatten (2) erstrecken.

3. Wärmetauscher für wandmontierte Kondensatorkessel nach den vorhergehenden Ansprüchen, **dadurch gekennzeichnet, dass** die Enden der zweiten elliptischen Rohre (4, 5) und der kreisrunden Rohre (7) in einem Ofen mittels geeigneter Legierungen auf zwei Rohrleitungsplatten (10, 11) gelötet werden, welche mit Abdeckungen (12, 13) gekoppelt sind, die geeignete Labyrinth-Verbindungskammern (14) aufweisen, welche durch Trennwände (15) voneinander getrennt sind.

4. Wärmetauscher für wandmontierte Kondensatorkessel nach den vorhergehenden Ansprüchen **dadurch gekennzeichnet, dass** er ein dicht abschließendes Gehäuse (16) aufweist, welches den Rand der Einheit bildet, welche die Brennkammer (6) mit den zweiten Rohren (4, 5), den mittleren Teil (3) des Wärmetauschers, bestehend aus mehreren ersten Rohren (1), die sich durch Wärmetauschplatten (2) erstrecken, und den mehreren Rohren (7) mit kreisrundem Querschnitt der Rauchkammer (8) umschließt, so dass der Rauch aus der Brennkammer (6) zu dem Auslass (9) und in Richtung des Abluftkamins strömt.

5. Wärmetauscher für wandmontierte Kondensatorkessel nach den vorhergehenden Ansprüchen **dadurch gekennzeichnet, dass** ein monothermischer Wärmetauscher vorgesehen ist, der eine gemischte Nass/Trocken-Austauschoberfläche in der Zone des Raucheinlasses und eine nur nasse Austauschoberfläche in der Zone des Rauchauslasses aufweist, um bessere Leistungen hinsichtlich des Wirkungsgrades bei geringen Fluidturbulenzen zu erreichen, so dass sich nur geringe Lastverluste hinsichtlich des Wassers und des Rauchs ergeben.

6. Wärmetauscher für wandmontierte Kondensatorkessel nach den vorhergehenden Ansprüchen **dadurch gekennzeichnet, dass** der Wärmetauscher einen doppelten Fluidkreislauf aufweist, der von sowohl dem Wasser des Heizkreislaufs als auch von dem Wasser des Sanitärkreislaufs durchlaufen wird, um so die notwendige Austauschoberfläche für die unmittelbare Bereitung von Sanitärwasser zu integrieren.

## Revendications

1. Echangeur de chaleur pour chaudières murales à condensation comprenant une pluralité de premiers tuyaux (1) de section elliptique en aluminium ou en acier inoxydable placés en deux rangées ou plus et traversant une pluralité de plaques de transfert de chaleur (2), ces plaques d'aluminium ou d'acier inoxydable étant espacées avec un espacement constant et étant brasées sur les premiers tuyaux elliptiques (1) pour former avec eux la surface d'échange thermique mixte, humide/sèche, de la partie centrale (3) de l'échangeur de chaleur ; et deux seconds tuyaux elliptiques (4, 5) identiques et du même matériau que les premiers tuyaux étant présents dans la partie supérieure de l'échangeur de chaleur pour former les parois humides latérales destinées à refroidir la chambre de combustion (6) ; l'échangeur de chaleur étant **caractérisé en ce que** une série de tuyaux (7) de section circulaire, en aluminium ou en acier inoxydable, est présente dans la partie inférieure de l'échangeur de chaleur lesquels ne traverse pas une pluralité de plaques de transfert de chaleur et déterminent, à l'intérieur d'une chambre de fumée (8), la zone de condensation destinée à récupérer la chaleur latente de la fumée avant une sortie (9) donnant sur une cheminée d'échappement ; et **en ce que** les tuyaux de l'échangeur de chaleur sont disposés de telle manière que l'eau de l'installation de chauffage circule à travers l'échangeur de chaleur dans la direction opposée à la direction de la fumée, ladite eau entrant à l'intérieur des tuyaux (7) de section circulaire de la chambre de fumée (8), pour continuer à l'intérieur des seconds tuyaux (4, 5) afin de refroidir la chambre de combustion d'où l'eau sort pour aller en direction de l'installation de chauffage.

2. Echangeur de chaleur pour chaudières murales à condensation selon la revendication 1 chaleur comprenant un tuyau d'échange de chaleur (19), de préférence en cuivre, pour la production immédiate d'eau chaude sanitaire, placé à l'intérieur d'une pluralité de premiers tuyaux elliptiques (1) traversant les plaques de transfert de chaleur (2).

3. Echangeur de chaleur pour chaudières murales à condensation selon les revendications précédentes, **caractérisé en ce que** les extrémités des seconds tuyaux elliptiques (4, 5) et des tuyaux circulaires (7) sont brasés dans un four avec des alliages appropriés sur deux plaques de tuyauterie (10, 11) couplées à des couvercles (12, 13) comportant des chambres de connexion labyrinthiques appropriées (14) séparées par des parois de séparation (15).

4. Echangeur de chaleur pour chaudières murales à condensation selon les revendications précédentes, **caractérisé en ce qu'**il comprend un carter (16) de fermeture hermétique définissant la bordure de l'unité englobant la chambre de combustion (6) avec les seconds tuyaux (4, 5), la partie centrale (3) de l'échangeur de chaleur constituée de plusieurs premiers tuyaux (1) traversant des plaques de transfert de chaleur (2) et la pluralité de tuyaux (7) de section circulaire de la chambre de fumée (8) de sorte que la fumée circule de la chambre de combustion (6) vers la sortie (9) et vers la cheminée d'échappement.

5. Echangeur de chaleur pour chaudières murales à condensation selon les revendications précédentes, **caractérisé en ce qu'**un échangeur de chaleur mono-thermique présente une surface d'échange mixte, sèche/humide, dans la zone d'entrée des fumées et seulement humide dans la zone de sortie des fumées afin d'obtenir le meilleur rendement, avec une faible turbulence des fluides de manière à avoir une faible perte de charge concernant l'eau et les fumées.

6. Echangeur de chaleur pour chaudières murales à condensation selon les revendications précédentes, **caractérisé en ce que** l'échangeur de chaleur possède un double circuit de fluide traversé par l'eau du circuit de chauffage et l'eau du circuit sanitaire de manière à intégrer la surface d'échange nécessaire à la production immédiate d'eau sanitaire.
